Europäisches Patentamt

European Patent Office

Office européen des brevets

(19)

(11) Veröffentlichungsnummer: **0 218 574 B1**

(12) # EUROPÄISCHE PATENTSCHRIFT

(45) Veröffentlichungstag der Patentschrift: 28.08.91

(51) Int. Cl.⁵: **B01D 53/36**

(21) Anmeldenummer: **86890275.0**

(22) Anmeldetag: **07.10.86**

(54) **Verfahren zum Reinigen von Gasgemischen.**

(30) Priorität: **08.10.85 AT 2906/85**

(43) Veröffentlichungstag der Anmeldung:
**15.04.87 Patentblatt 87/16**

(45) Bekanntmachung des Hinweises auf die
Patenterteilung:
**28.08.91 Patentblatt 91/35**

(84) Benannte Vertragsstaaten:
**AT BE CH DE ES FR GB GR IT LI LU NL SE**

(56) Entgegenhaltungen:
**DE-A- 2 118 066**
**FR-A- 2 146 420**
**FR-A- 2 382 923**
**US-A- 2 385 200**
**US-A- 4 325 923**

(73) Patentinhaber: **Envirotec AG**
**Am schrägen Weg 2**
**FL-9490 Vaduz(LI)**

(72) Erfinder: **Schmid, Peter J.**
**Neustiftgasse 93**
**A-1070 Wien(AT)**
Erfinder: **Kranebitter, Franz, Dr.**
**Neustiftgasse 93**
**A-1070 Wien(AT)**
Erfinder: **Panning, Peter**
**Neustiftgasse 93**
**A-1070 Wien(AT)**

(74) Vertreter: **Kliment, Peter, Dipl.-Ing. Mag.-jur.**
**Singerstrasse 8**
**A-1010 Wien(AT)**

## Beschreibung

Die Erfindung betrifft ein Verfahren zur Entfernung umweltfeindlicher Gase, wie Stickoxide, Kohlenmonoxid, Kohlenwasserstoffe und/oder Schwefeloxide aus Ab- und Rauchgasen, in flüssiger Phase mit Hilfe von Katalysatoren. Solche Abgase entstehen bei der Herstellung von Salpetersäure oder als Abgase von Verbrennungsmotoren. Es sind Verfahren bekannt, nach welchen z.B. Stickoxide mit Hilfe von Katalysatoren und beigefügten Substanzen, z.B. Ammoniak, in der Gasphase entfernt werden. Diese Anlagen erfordern jedoch beträchtliche Investitionen. Hinzu kommt, daß die Haltbarkeit der verwendeten Katalysatoren begrenzt ist, sodaß sie um Abstand von spätestens zwei Jahren erneuert werden müssen, um eine zufriedenstellende Funktion zu gewährleisten.

Erfindungsgemäß können diese Nachteile überbrückt und 90 bis 99% der in den Gasen vorliegenden umweltfeindlichen Gase, wie Stick- und Schwefeloxiden, Kohlenwasserstoffen und Kohlenmonoxid, in einem Arbeitsgang aus den Gasgemischen entfernt werden. Dies wird bei dem erfindugsgemäßen Verfahren zur Entfernung umweltfeindlicher Fase, wie Stickoxide, Kohlenmonoxid, Kohlenwasserstoffe und/oder Schwefeloxide, aus Ab- und Rauchgasen, in flüssiger Phase mit Hilfe von Katalysatoren dadurch erreicht, daß die Gase mit einer Kontaktflüssigkeit, die einen in ihr suspendierten oder gelösten Katalysator enthält, in intensivem Phasenkontakt gebracht werden, indem aus den Gasen und der Kontaktflüssigkeit ein Schaum gebildet und die Reaktion in der so gebildeten Schaumphase vor sich gehen gelassen wird. Als Katalysatoren eignen sich z.B. anorganische Katalysatoren, wie Raney-Nickel oder Platin-Mohr, oder organische Katalysatoren, z.B. Metallphthalocyanine mit z.B. Kupfer, Eisen oder Kobalt als Zentralatom, wobei diese katalytisch wirksamen Materialien als Suspension, z.B. Platinmohr oder Phthalocyanine, oder als Lösung, z.B. Phthalocyaninsulfonate, in einer Trägerflüssigkeit eingesetzt werden. Als Trägerflüssigkeit eignen sich z.B. Silikonöle und Paraffinöle, aber auch andere chemisch inerte Flüssigkeiten, wie Chinolyn, Trichlorbenzol oder Benzophenon. Bei Verwendung wässriger Katalysatorlösungen wird die Reaktion vorzugsweise bei Temperaturen von 20 bis 150 $^\circ$C, insbesondere bei 90 bis 100 $^\circ$C ausgeführt; bei Verwendung hochsiedender Kontaktflüssigkeiten bei 20 bis 250 $^\circ$C insbesondere 150 $^\circ$C, wobei jedoch bei erfindungsgemäßer Reinigung von Abgasen von Verbrennungsmotoren die Reaktionstemperaturen bis zu 500 $^\circ$C betragen. Vorzugsweise wird die Kontaktflüssigkeit im Gegenstrom zum Gas von oben nach unten durch die Schaumphase fließen gelassen, ein Teilstrom abgezweigt und nach allfälligem Durchleiten durch einen Wärmeaustauscher auf Katalysatordichte geprüft und erforderlichen-falls der Katalysator ergänzt. Bei Entfernung von Stickoxiden kann dem Gas ein mit diesen reagierenden Substrat, vorzugsweise Ammoniak, in stöchiometrischen Verhältnis beigemengt werden. Als derartige Reaktionssubstrate eignen sich außer Ammoniak auch z.B. Kohlenmonoxid und Kohlenwasserstoffe.

Die Einhaltung eines intensiven Gas-Flüssigkeit-Phasenkontaktes bei möglichst geringem Druckverlust ermöglicht die Ausführung des erfindungsgemäßen Verfahrens im industriellen Ausmaß. Zur Erzielung dieses Effektes eignen sich insbesondere Vorrichtungen mit Phasenkontaktböden, welche mithelfen, einen hydrostatischen Druck der über diesen lastenden Flüssigkeitssäule zu überwinden und zu regulieren. Eine solche Vorrichtung ist z.B. in der EP-A-0.073.801 beschrieben.

Es ist bekannt, daß Metallphthalocyanine als Katalysatoren zur Hydrierung von Kohlenmonoxid zu $C_1$ - $C_5$ Kohlenwasserstoffeneingesetzt werden können, und daß Kobalt- oder Eisenphthalocyanine, auf Kohle aufgebracht, zur Entfernung von Stickoxiden aus Zigarettenrauch dienen können. Bei dem bisherigen Stand der Technik war jedoch die große Wirksamkeit von in Flüssigkeiten suspendierten oder gelösten Metallphthalocyaninen und anderen Katalysatoren in intensivem Phasenkontakt mit zu reinigenden Gasgemischen überraschend.

Die erfindungsgemäß erzielte erhöhte Aktivierung von Katalysatoren ist von großer technischer Bedeutung. So ist bei etwa 1000 ppm Stickoxide enthaltenden Abgasen von Kraftwerken bei erfindungsgemäßen Einsatz von Eisenphthalocyanin bei 150 $^\circ$C unter Verwendung von etwa 10 Phasenkontaktböden ein Wirkungsgrad von 90 % erreichbar, wobei dieser Wirkungsgrad bei Verwendung einer größeren Anzahl von Kontaktböden noch erhöht und bis auf 99 % gebracht werden kann. Bei einer Umlaufmenge von 200 l Trägerflüssigkeit werden 10 kg Katalysator benötigt.

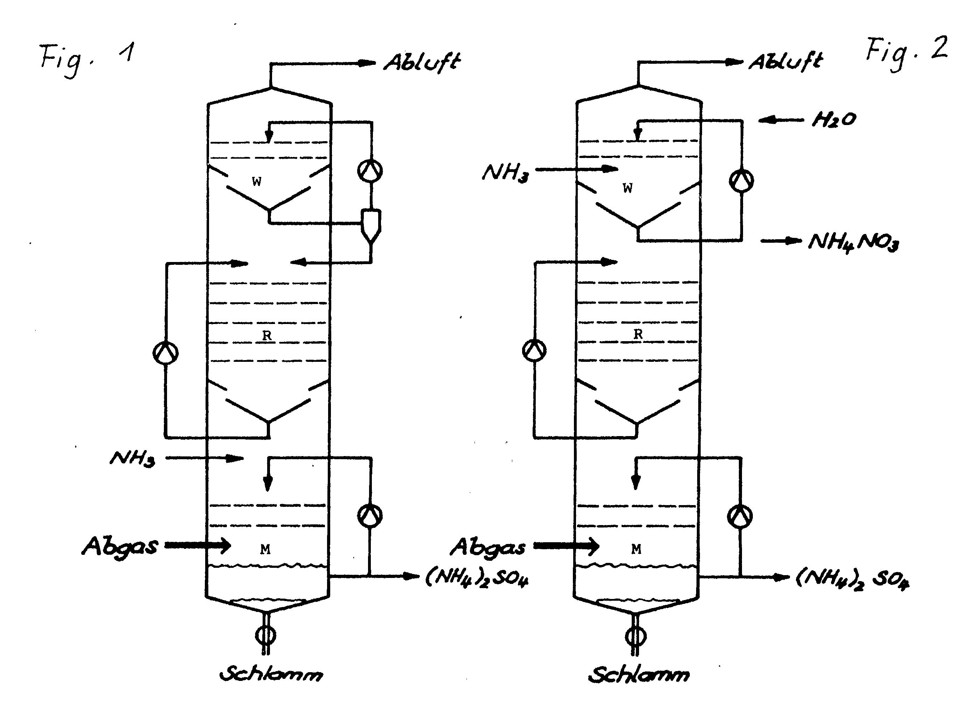

Zwei Ausführungsweisen des erfindungsgemäßen Verfahrens seien an Hand einer Zeichnung näher beschrieben. Die Fig. 1 zeigt die Mitverwendung von Ammoniak als Reaktionssubstrat.

Vor Einleitung in den Mischraum M wird das Abgas mit ammoniakalischer Lösung entstaubt und entschwefelt. Im Mischraum M wird, durch eine Meßsonde gesteuert, Ammoniak stöchiometrisch zugemischt.

Im Reaktionsraum R wird der Katalysator als Suspension oder in Lösung in einer Trägerflüssigkeit, z.B. Wasser, Paraffinölen oder Silikonölen, umgewälzt und im Gegenstrom zum Abgas mit Hilfe von Kontaktelementen in einen intensiven Phasenkontakt (Schaumphase) gebracht. Dabei reagieren die Stickoxide mit dem zugesetzten $NH_3$ zu Stickstoff und Wasser.

Im Gaswäscher W werden aus den gereinigten Abgasen die verbliebenen Katalysatorreste mit gereinigter Trägerflüssigkeit ausgewaschen und dann in den Reaktionsraum r rückgeführt.

Die Konzentration des Katalysators liegt bei 1 bis 30 Gew. -% der eingesetzten Trägerflüssigkeit, vorzugsweise 5 Gew.-%. Die Temperatur des Katalysators liegt, abhängig vom Katalysator, in einem Bereich von 20 bis 500° C, vorzugsweise 20 bis 150° C.

In Fig. 2 wird gezeigt, wie, unter Verwendung des erfindungsgemäßen Verfahrens aus den Stickoxiden Ammoniumnitrat gewonnen werden kann, wobei nämlich $NH_3$ nicht in den Reaktionsraum R sondern in den Gaswäscher eingeleitet wird.

Bei Reinigung von Abgasen, die von stationären Dieselmotoren stammen, ist ein Entstauben und Entschwefeln nicht erforderlich. Der Entstickungsgrad liegt bei erfindungsgemäßer Reinigung solcher, bis zu 10 000 ppm $NO_x$ enthaltener Abgase nach dem erfindungsgemäßen Verfahren bei über 90 %. Bei Erhöhung des derzeitigen CO Gehaltes von Dieselmotorabgasen könnten auch die Abgase von Lastkraftwagen unter Verwendung von CO als Reaktionssubstrat erfindungsgemäß entstickt, das CO zu $CO_2$ und die Kohlenwasserstoffe zu $CO_2$ und $H_2O$ umgesetzt werden.

## Patentansprüche

1. Verfahren zur Entfernung umweltfeindlicher Gase, wie Stickoxide, Kohlenmonoxid, Kohlenwasserstoffe und/oder Schwefeloxide aus Ab- und Rauchgasen, in flüssiger Phase mit Hilfe von Katalysatoren, dadurch gekennzeichnet, daß die Gase mit einer Kontaktflüssigkeit, die einen in ihr suspendierten oder gelösten Katalysator enthält, derart in intensiven Phasenkontakt gebracht werden, indem aus den Gasen und der Kontaktflüssigkeit ein Schaum gebildet und die Reaktion, vorzugsweise unter Einleitung von Ammoniak, in der so gebildeten Schaumphase vor sich gehen gelassen wird.

2. Verfahren nach Anspruch 1, dadurch gekennzeichnet, daß der Schaum in einer mit Phasenkontaktböden versehenen Säule gebildet wird, und das Gas vorzugsweise im Gegenstrom zu der Kontaktflüssigkeit strömen gelassen wird.

3. Verfahren nach Anspruch 1 oder 2, dadurch gekennzeichnet, daß wässerige Katalysatorlösungen eingesetzt werden, wobei die Reaktion bei 20 bis 150° C, vorzugsweise bei 90 bis 100° C, ausgeführt wird.

4. Verfahren nach Anspruch 1 oder 2, dadurch gekennzeichnet, daß als Kontaktflüssigkeiten hochsiedende Flüssigkeiten eingesetzt werden, wobei die Reaktion bei 20 bis 250° C, vorzugsweise bei 150° C, bei Verwendung zur Reinigung von Abgasen von Verbrennungsmotoren jedoch bei Temperaturen von bis zu 500° C ausgeführt wird.

5. Verfahren nach einem der Ansprüche 1 bis 4, dadurch gekennzeichnet, daß die Kontaktflüssigkeit im Gegenstrom zum Gas von oben nach unten durch die Schaumphase fließen gelassen, ein Teilstrom abgezweigt und nach allfälligem Durchleiten durch einen Wärmeaustauscher auf Katalysatordichte geprüft und erforderlichenfalls der Katalysator ergänzt wird.

## Claims

1. Method for removing environmentally harmful gases such as nitrogen oxides, carbon monoxides, hydrocarbons and/or sulphur oxides from exhaust and flue gases in a liquid phase by means of catalyzers, characterized in that said gases are brought into such an intensive phase contact with a contact liquid, said contact liquid containing a catalyzer suspended or dissolved in it, so that a foam is formed from the gases and the contact liquid and the reaction, preferably by admitting ammonia, is allowed to proceed in the thus formed foam phase.

2. Method in accordance with claim 1, characterized in that the foam is formed in a column provided with phase contact trays and that the gas is preferably allowed to flow in a countercurrent to the contact liquid.

3. Method in accordance with claim 1 or 2, characterized in that hydrous catalyzer solutions are used, whereby the reaction is performed at 20° C to 150° C, preferably at 90° C to 100° C.

4. Method in accordance with claim 1 or 2, characterized in that high-boiling liquids are used as contact liquids, whereby the reaction is performed at 20° C to 250° C, preferably at 150° C, and in the event of use for cleaning exhaust gases from internal combustion engines, however, at temperatures of up to 500° C.

5. Method in accordance with one of the claims 1 to 4, characterized in that the contact liquid is allowed to flow through the foam phase from the top to the bottom in a countercurrent to the gas, whereby a partial flow is diverted and, after being optionally guided through a heat exchanger, examined for catalytic density, whereby the catalyzer is complemented if necessary.

**Revendications**

1. Procédé pour éliminer des gaz polluants, tels que des oxydes d'azote, le monoxyde de carbone, des hydrocarbures et/ou des oxydes de soufre, de gaz d'échappement et de gaz usés, en phase liquide, au moyen de catalyseurs, procédé caractérisé en ce que les gaz et un liquide catalytique contenant un catalyseur en solution ou en suspension sont mis en contact de phases intense de telle façon qu'il se forme une mousse à partir des gaz et du liquide catalytique, et on effectue la réaction, de préférence en injectant de l'ammoniac, dans la phase mousse ainsi formée.

2. Procédé selon la revendication 1 caractérisé en ce que la mousse est formée dans une colonne équipée de plateaux de contat de phases, et on fait s'écouler le gaz, de préférence, à contre-courant du liquide catalytique.

3. Procédé selon l'une des revendications 1 et 2, caractérisé en ce qu'on utilise des solutions aqueuses de catalyseurs, la réaction étant effectuée à une température comprise entre 20 et 150° C, de préférence entre 90 et 100° C.

4. Procédé selon l'une des revendications 1 et 2, caractérisé en ce qu'on utilise, comme liquides catalytiques, des liquides à haut point d'ébullition, la réaction étant effectuée à une température comprise entre 20 et 250° C, de préférence à 150° C, mais étant effectuée à des températures pouvant aller jusqu'à 500° C lorsque la réaction est utilisée pour l'épuration de gaz d'échappement de moteurs à combustion interne.

5. Procédé selon l'une quelconque des revendications 1 à 4, caractérisé en ce qu'on fait s écouler le liquide catalytique à contre-courant du gaz, de haut en bas, à travers la phase mousse, on dérive un courant partiel et, après un passage éventuel à travers un échangeur thermique, on examine la densité du catalyseur et, au besoin, on complète le catalyseur.

Fig. 1

Abluft

W

R

NH₃

Abgas

M

(NH₄)₂SO₄

Schlamm

Fig. 2

Abluft

H₂O

NH₃

W

NH₄NO₃

R

Abgas

M

(NH₄)₂SO₄

Schlamm

5

EP 0 218 574 B1